# FASCICULE DE BREVET EUROPEEN

(11) **EP 3 437 932 B1**
(45) Date de publication et mention de la délivrance du brevet: **26.02.2020**
(21) Numéro de dépôt: 18186923.1
(22) Date de dépôt: 01.08.2018
(51) Int. Cl.: B60R 13/08, B60J 5/04, G10K 11/168

(54) **PANNEAU D'ÉTANCHÉITÉ ET D'INSONORISATION POUR VÉHICULE**
DICHTUNGS- UND SCHALLDÄMMENDE PLATTE FÜR EIN FAHRZEUG
SEALING- AND SOUNDPROFING PANEL FOR A VEHICLE

(30) Priorité: 02.08.2017 FR 1757436
(43) Date de publication de la demande: 06.02.2019
(73) Titulaire: ADHEX TECHNOLOGIES, 21300 Chenôve (FR)
(72) Inventeur: DURAND, Hervé, 21000 DIJON (FR)
(74) Mandataire: Gevers & Orès

(56) Documents cités:
- EP-A1- 1 612 768
- EP-A1- 2 857 263
- WO-A1-2004/113106
- WO-A2-03/042444
- WO-A2-2008/005936

## Description

### Domaine technique

La présente invention concerne un panneau d'étanchéité et d'insonorisation pour véhicule permettant d'améliorer le confort acoustique des véhicules tels que les véhicules automobiles par exemple, ainsi que son procédé de fabrication.

### Etat de la technique

Il est bien connu que, dans le domaine de l'automobile notamment, les constructeurs cherchent à améliorer l'insonorisation de l'habitacle en plaçant des panneaux d'insonorisation afin d'atténuer les bruits extérieurs et d'améliorer l'acoustique des haut-parleurs qui sont usuellement fixés sur la face interne du panneau de garnissage des portes. On notera que ce type de panneau assure également une fonction d'étanchéité des intérieurs des portes afin d'éviter que des eaux pluviales et de la saleté ne pénètre à l'intérieur de l'habitacle.

Ainsi, il est usuel de positionner un panneau d'insonorisation entre la doublure métallique interne du caisson de chaque porte et le panneau interne de garnissage de cette dernière. Ces panneaux d'insonorisation sont généralement constitués d'une plaque obtenue dans un matériau polymère, éventuellement apte à être thermoformé pour s'adapter à la forme de la doublure métallique interne du caisson de la porte, et sont solidarisés à ladite doublure métallique interne du caisson de la porte au moyen d'un cordon d'un adhésif sensible à la pression déposé à la périphérie desdits panneaux. Ces panneaux d'insonorisation en matériau polymère permettent de supprimer, ou à tout le moins d'atténuer, les bruits extérieurs et à améliorer la qualité des sources émettrices telles que les haut-parleurs ; toutefois, ces panneaux sont également la source de vibrations qui se traduisent par un bourdonnement perceptible dans l'habitacle.

Afin de remédier à cet inconvénient, on a déjà imaginé des panneaux d'étanchéité et d'insonorisation plus épais et/ou plus dense. C'est le cas notamment du document FR 2 881 086 et du document US 7 055 887.

Le document FR 2 881 086 décrit un panneau d'étanchéité et d'insonorisation acoustique en polyéthylène téréphtalate, communément appelé PET, cristallisé qui présente une masse volumique supérieure à 100 kg/m³. Le polyéthylène téréphtalate cristallisé ayant une bonne stabilité dimensionnelle en température, i.e. que les panneaux se dilatent peu en cas de forte variation de la température en raison des variations climatiques, les panneaux obtenus dans ce matériau ont l'avantage de ne pas se décoller sur certaines parties.

Toutefois, le décollement des panneaux n'est pas uniquement induit par la déformation des panneaux lors des variations de température mais également par les propriétés physiques de la colle utilisée pour fixer les panneaux à la doublure métallique interne du caisson de la porte. Par ailleurs, cette solution ne permet pas de supprimer le bourdonnement procuré par le panneau lui-même.

Le document US 7 055 887 décrit un panneau d'étanchéité et d'insonorisation dont la rigidité est augmentée et dont le périmètre d'étanchéité est amélioré. Ledit panneau est constitué d'une couche dite inter-polymérique et d'une couche polymérique qui est positionnée au droit de la doublure métallique interne du caisson de la porte et qui est composée de polyéthylène haute densité dont le pourcentage élevé d'élongation permet, par un procédé de thermoformage, la formation de nervures en relief adjacentes à la périphérie du panneau. Lesdites nervures permettent de raidir le panneau et d'améliorer son étanchéité au niveau de la doublure métallique interne du caisson. Lesdits panneaux comportent également des formes embouties en relief contigües aux nervures afin de répartir la pression d'appui le long de toute la nervure en relief.

Ce type de panneau ne présente une rigidité accrue qu'à sa périphérie de sorte que le reste de la surface du panneau continue d'émettre des vibrations à l'origine de distorsions acoustiques des haut-parleurs.

Afin de pallier ces inconvénients, la demanderesse a développé, et déposé une demande de brevet français FR 1751742, qui décrit un panneau d'étanchéité et d'insonorisation pour porte de véhicule automobile. Ledit panneau comprend une paroi d'étanchéité avec un bord périphérique apte à être disposé de manière étanche contre la doublure de la porte de manière à fermer le caisson de la porte et au moins une plaque en matériau insonorisant disposé contre la paroi. Ladite paroi d'étanchéité est en matière plastique thermoformée et présente une épaisseur comprise entre 2 et 5 mm. Les plaques en matériau insonorisant présentent une masse surfacique supérieure à 2 kg/m², de préférence obtenues dans un matériau bitumeux tel que de l'IFF selon l'acronyme « Insonorisant en Feuille Fusible », et sont fixées sur la paroi d'étanchéité par collage au moyen de bandes adhésives double face.

On connait également les documents EP 1 612 768 et WO 2008/005936 décrivant des panneaux d'étanchéité et d'insonorisation.

Ces documents EP 1 612 768 et WO 2008/005936 décrivent des panneaux d'étanchéité et d'insonorisation pour véhicule permettant d'améliorer le confort acoustique des véhicules tels que les véhicules automobiles ou similaire, comprenant au moins une paroi d'étanchéité dont le bord périphérique est apte à être disposé de manière étanche contre une structure du véhicule, et au moins une plaque en matériau insonorisant solidarisée sur l'une des faces de la paroi au moyen d'une couche adhésive

Toutefois, ces panneaux étant soumis à des conditions de variation de température et d'humidité, les plaques en matériau insonorisant ont tendance à se décoller rendant lesdits panneaux inefficaces. Accessoirement, ces panneaux sont généralement stockés par empilement de sorte que les plaques en matériau insonorisant, obtenues dans un matériau bitumeux, collent à la face inférieure du panneau supérieur provoquant un amalgame des panneaux qui nuit à leurs manipulations sur les chaînes de montage.

### Divulguation de l'invention

L'un des buts de l'invention est donc de remédier à au moins un de ces inconvénients en proposant un panneau d'étanchéité et d'insonorisation pour véhicule et un procédé de fabrication dudit panneau d'insonorisation de conception simple et peu onéreuse, présentant une bonne tenue aux variations de température et d'humidité afin d'éviter tout décollement des plaques en matériau bitumeux sous l'effet des vibrations.

A cet effet et conformément à l'invention, il est proposé un panneau d'étanchéité et d'insonorisation pour véhicule permettant d'améliorer le confort acoustique des véhicules tels que les véhicules automobiles ou similaire, comprenant au moins une paroi d'étanchéité dont le bord périphérique est apte à être disposé de manière étanche contre une structure du véhicule, et au moins une plaque en matériau insonorisant solidarisée sur l'une des faces de la paroi au moyen d'une couche adhésive ; ledit panneau est remarquable en ce que ladite paroi d'étanchéité (2) est obtenue dans une dans une mousse polyéthylène à cellules fermées réticulée physiquement présentant une épaisseur comprise entre 2 et 5 mm, une masse volumique inférieure à 0,5 g.cm⁻³ et un module de Young compris entre 4 et 30 N/mm², en ce que la ou les plaques en matériau insonorisant (3) sont obtenues dans un matériau bitumeux dit IFF selon l'acronyme « Insonorisant en Feuille Fusible » présentant une masse volumique supérieure à 2 g.cm⁻³ et comprenant du bitume, au moins une charge minérale tel que du carbonate de calcium et/ou de l'oxyde de calcium et/ou similaire, et au moins un polymère, et en ce que ladite couche adhésive est obtenue dans un adhésif non sensible à la pression dit non PSA à base de polyoléfine thermofusible ou d'éthylène-vinylacetate (EVA) thermofusible, ledit adhésif présentant un pouvoir adhésif supérieur à 5 N/cm à température ambiante.

De manière particulièrement avantageuse, ledit adhésif présente une déformation en fluage inférieure à 1 mm pour une durée supérieure à 24 heures pour une charge de 300 g.cm⁻² à une température de 85°C.

Par ailleurs, Ledit adhésif présente une viscosité comprise entre 30000 mPas et 2000 mPas à une température comprise entre 160°C et 180°C.

De plus, ledit adhésif présente un point de ramollissement bille et anneau supérieur à 100°C.

De préférence, ladite paroi d'étanchéité présente une tension de surface inférieure à 35 J.m⁻².

Selon une caractéristique particulièrement avantageuse, la face libre de la ou des plaques en matériau insonorisant est recouverte en tout ou partie d'une peinture anti-collante afin que les plaques en matériau insonorisant, obtenues dans un matériau bitumeux, ne collent à la face inférieure du panneau supérieur provoquant un amalgame des panneaux qui nuit à leurs manipulations sur les chaînes de montage.

Ladite peinture anti-collante est composée de résines, de pigments et de charges minérales dispersées dans de l'eau.

### Brève description des dessins

D'autres avantages et caractéristiques ressortiront mieux de la description qui va suivre, de plusieurs variantes d'exécution, données à titre d'exemples non limitatifs, d'un panneau d'étanchéité et d'insonorisation pour véhicule suivant l'invention, à partir des dessins annexés sur lesquels :
- la figure 1 est une vue de face d'un panneau d'étanchéité et d'insonorisation pour véhicule suivant l'invention,
- la figure 2 est une vue en élévation d'un panneau d'étanchéité et d'insonorisation pour véhicule suivant l'invention.

### Mode de réalisation de l'invention

Par souci de clarté, dans la suite de la description, les mêmes éléments ont été désignés par les mêmes références aux différentes figures. Les termes « extérieur » et « intérieur » s'entendent par rapport à l'habitacle du véhicule. De plus, les diverses vues ne sont pas nécessairement tracées à l'échelle.

On décrira ci-après un panneau d'étanchéité et d'insonorisation d'un véhicule automobile et plus particulièrement d'une porte de voiture ; toutefois, il est bien évident que le panneau d'étanchéité et d'insonorisation suivant l'invention pourra être utilisé pour tout type de véhicule sans pour autant sortir du cadre de l'invention.

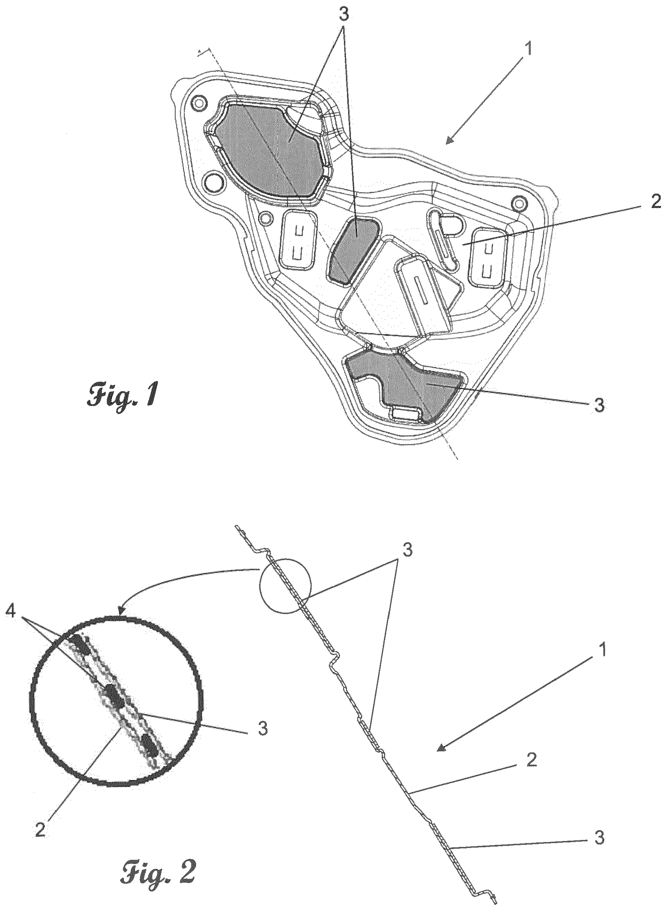

En référence aux figures 1 et 2, le panneau d'étanchéité et d'insonorisation 1 suivant l'invention est constitué d'une paroi d'étanchéité 2 et d'au moins une plaque en matériau insonorisant 3. Dans cet exemple particulier de réalisation, le panneau d'étanchéité et d'insonorisation 1 comporte trois plaques en matériau insonorisant 3 ; toutefois, il est bien évident que ledit panneau 1 pourra comprendre un nombre quelconque de plaques en matériau insonorisant 3 sans pour autant sortir du cadre de l'invention. La paroi d'étanchéité 2 présente un bord périphérique 4 qui est apte à être disposé de façon étanche contre une doublure de la porte, notamment la doublure métallique interne du caisson, de manière à obturer cette partie inférieure de la porte, non représentée sur les figures. Les plaques en matériau insonorisant 3 sont collées contre la paroi d'étanchéité 2 comme il sera détaillé un peu plus loin.

Ladite paroi d'étanchéité 2 est obtenue dans une matière plastique, présente une épaisseur comprise entre 2 et 5 mm et présente, de préférence, une tension de surface inférieure à 35 J.m⁻². Elle peut être notamment thermoformée pour s'adapter aux différents équipements fixés sur la face externe du panneau interne de garnissage, dont notamment le ou les haut-parleurs, et forme ainsi des creux et des reliefs. Par ailleurs, ladite paroi d'étanchéité 2 est obtenue dans une matière plastique présentant une masse volumique inférieure à 0.5 g.cm⁻³ et un module de Young compris entre 4 et 30 N/mm². De préférence, ladite paroi d'étanchéité 2 est obtenue dans une mousse polyéthylène à cellules fermées réticulée physiquement. Par exemple, la paroi d'étanchéité 2 est obtenue dans des panneaux de mousse commercialisés par la société Sekisui Alvéo sous la référence Alveolen NE FFA 03 02.7 et présente une épaisseur de 2,7 mm, une masse volumique de 0.37 g.cm⁻³, un grammage surfacique de 1000 g/m² et un module de Young compris entre 5 et 18 N/mm² selon la norme D41 1009.

Par ailleurs, les plaques en matériau insonorisant 3 présentent une masse volumique supérieure à 2 g.cm⁻³ et sont, de préférence, obtenues dans un matériau bitumeux dit IFF selon l'acronyme « Insonorisant en Feuille Fusible » comprenant du bitume, au moins une charge minérale tel que du carbonate de calcium et/ou de l'oxyde de calcium et/ou similaire, et au moins un polymère. Ce matériau est connu de l'état de l'art pour amortir les vibrations liées à une structure de base, comme par exemple le plancher, le tunnel, et le toit des véhicules automobiles. Les plaques en matériau insonorisant 3 de la présente invention présente une épaisseur supérieure à 2 mm et/ou inférieure à 5 mm. Afin de supprimer par amortissement les vibrations du panneau d'étanchéité et d'insonorisation 1, une ou plusieurs plaques 3 peuvent être collées contre le panneau d'étanchéité 2 sur une de ses faces intérieure et/ou extérieure. Le collage des plaques en matériau insonorisant 3 est effectué sur une seule face de cette plaque 3, la surface extérieure de cette plaque 3 restant donc « libre ».

Les plaques en matériau insonorisant 3 sont solidarisées sur l'une des faces de la paroi au moyen d'une couche adhésive, représentée sur la figure 2 sous forme de cordons 4. Ladite couche adhésive est obtenue dans un adhésif non sensible à la pression thermofusible, ledit adhésif présentant un pouvoir adhésif supérieur à 5 N/cm à température ambiante, une viscosité comprise entre 30000 mPas et 2000 mPas à une température comprise entre 160°C et 180°C.Ledit adhésif présente un point de ramollissement bille et anneau supérieur à 100°C.

Par ailleurs, de manière particulièrement avantageuse, ledit adhésif présente une déformation en fluage inférieure à 1 mm pour une durée supérieure à 24 heures pour une charge de 300 g.cm⁻² à une température de 85°C. Ledit cordon adhésif présente une épaisseur comprise entre 0.5 mm et 4 mm.

Par ailleurs, ledit adhésif consiste en un adhésif non sensible à la pression dit non PSA à base de polyoléfine thermofusible ou d'éthylène-vinylacetate (EVA) thermofusible. Un tel adhésif pourra ainsi consister par exemple dans les adhésifs commercialisés par la société Henkel sous les références Technomelt AS 5375 et/ou Technomelt AS 636 par exemple.

Dans un exemple de réalisation préférentiel, ledit adhésif consiste en un adhésif non sensible à la pression dit non PSA à base d'éthylène-vinyl acétate (EVA) thermofusible dont des exemples de formulations ainsi que les propriétés associées sont données dans le tableau ci-dessous :

| | | | **Formulations d'adhésif thermofusible non PSA** | | | | | |
|---|---|---|---|---|---|---|---|---|
| **Composant** | **Référence** | **Famille chimique** | **N°1** | **N°2** | **N°3** | **N°4** | **N°5** | **N°6** |
| **Polymère EVA** | Evatane 18-150 | Copolymère d'éthylène vinyl acétate | | | | 30% | 23% | 11% |
| | Evatane 28-25 | Copolymère d'éthylène vinyl acétate | 30% | 25% | 20% | | | |
| **Polymère acrylique** | Lotryl 28BA175 | Copolymère d'éthylène et d'acrylate de butyl | | | | 30% | 23% | 34% |
| | Lotryl 35BA320 | Copolymère d'éthylène et d'acrylate de butyl | 35% | 45% | 45% | | | |
| **Cire** | Sarawax GTL 105 | Cire de paraffine de synthèse | 10% | 10% | 10% | 10% | 10% | 10% |
| **Tackifiant** | Escorez 5300 | Résine hydrocarbonée cycloaliphatique | 25% | | | | | |
| | Piccotac 1100E | Résine hvdrocarbonée aliphatique | | | 25% | 30% | 45% | 45% |
| | Foral 105E | Ester de colophane hydrogéné | | 20% | | | | |

| **Résultats formulations ADHEX** | | | | | | |
|---|---|---|---|---|---|---|
| | **N°1** | **N°2** | **N°3** | **N°4** | **N°5** | **N°6** |
| **Point de ramollissement bille et anneau** | 108°C | 104°C | 105°C | 106°C | 103°C | 106°C |
| **Fluage statique à 85°C Charge 300 g/cm² Durée 48 heures** | Ni chute, ni glissement | Ni chute, ni glissement | Ni chute, ni glissement | Ni chute, ni glissement | Ni chute, ni glissement | Ni chute, ni glissement |
| **Immersion dans l'eau à 23°C (durée 48 heures)** | Aucun décollement | Aucun décollement | Aucun décollement | Aucun décollement | Aucun décollement | Aucun décollement |
| **Pouvoir adhésif sur acier (N/cm)** | >8 | >8 | >8 | >8 | >8 | > 8 |
| **Pouvoir adhésif sur mousse polyéthylène (N/cm)** | >6 | > 6 | > 6 | > 6 | > 6 | >6 |
| **Viscosité à 160°C (aiguille 27/5 rpm)** | 5200 | 4800 | 5000 | 7400 | 6000 | 5500 |
| **Viscosité à 170°C (aiguille 27/5 rpm)** | 3900 | 3900 | 4200 | 5900 | 5100 | 4500 |
| **Viscosité à 180°C (aiguille 27/5 rpm)** | 3200 | 3100 | 3200 | 4100 | 3900 | 3500 |

Les valeurs mesurées sont données pour un cordon desdites formulations adhésives collé entre la paroi d'étanchéité 2 d'un panneau d'étanchéité et d'insonorisation 1 et une plaque en matériau insonorisant 3. Ladite paroi d'étanchéité 2 est obtenue dans un panneau de mousse polyéthylène commercialisée par la société Sekisui Alvéo sous la référence Alveolen NE FFA 03 02.7 et présentant une épaisseur de 2,7 mm, une masse volumique de 0.37 g.cm⁻³, un grammage surfacique de 1000 g/m², un module de Young compris entre 5 et 18 N/mm² selon la norme D41 1009 ainsi qu'une tension de surface égale à 30 J.m⁻². Ladite plaque en matériau insonorisant 3 présente une masse volumique égale à 2.5 g.cm⁻³ pour une épaisseur de 3 mm et une masse surfacique égale à 7500 g/m².

Ainsi, le panneau d'étanchéité et d'insonorisation 1 obtenu par l'assemblage des plaques IFF 3 sur la paroi d'étanchéité 2 est ensuite collé sur la doublure métallique interne du caisson à l'aide habituellement d'un cordon de colle disposé à la périphérie du panneau 1 et, éventuellement, avec quelques points de colle réparties uniformément sur la face externe de la paroi d'étanchéité 2 notamment sur les parties en relief et les parties planes. Ensuite un panneau interne de garnissage, est fixé par clipsage sur l'autre face du panneau d'étanchéité et d'insonorisation 1. Le panneau d'étanchéité et d'insonorisation 1 se trouve ainsi inséré entre la tôle du caisson et le panneau de finition.

Les vibrations de la flexion du panneau d'étanchéité et d'insonorisation 1 produisent des déformations au sein des plaques IFF 3, ce qui provoque un amortissement des vibrations par dissipation d'énergie. L'avantage de cette plaque en matériau insonorisant 3 réside donc en ce que le matériau amortissant joue également par sa masse et le surcroît de raideur qu'il apporte à la paroi d'étanchéité 2. En conséquence il résulte qu'il n'y a pas lieu d'avoir d'autres éléments supplémentaires pour assurer la rigidité du panneau d'étanchéité et d'insonorisation 1 de la porte. L'amortissement des vibrations du panneau 1 supprime donc le bourdonnement perçu et la distorsion des haut-parleurs, d'autant plus que la plaque en matériau insonorisant 3 est disposée aussi en vis-à-vis des haut-parleurs.

La colle utilisée suivant l'invention permet d'éviter le décollement des plaques en matériau insonorisant 3 des parois d'étanchéité 2 lorsque le véhicule, et in fine le panneau d'étanchéité 1, est soumis à de fortes variations de température et d'humidité, et à des vibrations.

Par ailleurs, la face libre de la ou des plaques en matériau insonorisant 3 est avantageusement recouverte en tout ou partie d'une peinture anti-collante afin que les plaques en matériau insonorisant 3, obtenues dans un matériau bitumeux, ne collent à la face inférieure du panneau supérieur provoquant un amalgame des panneaux qui nuit à leurs manipulations sur les chaînes de montage. Ladite peinture anti-collante est, par exemple, composée de résines, de pigments et de charges minérales dispersées dans de l'eau.

Enfin, il est bien évident que les exemples que l'on vient de donner ne sont que des illustrations particulières en aucun cas limitatives quant aux domaines d'application de l'invention.

## Revendications

1. Panneau d'étanchéité et d'insonorisation (1) pour véhicule permettant d'améliorer le confort acoustique des véhicules tels que les véhicules automobiles ou similaire, comprenant au moins une paroi d'étanchéité (2) dont le bord périphérique est apte à être disposé de manière étanche contre une structure du véhicule, et au moins une plaque en matériau insonorisant (3) solidarisée sur l'une des faces de la paroi au moyen d'une couche adhésive, ***caractérisé* en ce que** ladite paroi d'étanchéité (2) est obtenue dans une dans une mousse polyéthylène à cellules fermées réticulée physiquement présentant une épaisseur comprise entre 2 et 5 mm, une masse volumique inférieure à 0,5 g.cm⁻³ et un module de Young compris entre 4 et 30 N/mm², **en ce que** la ou les plaques en matériau insonorisant (3) sont obtenues dans un matériau bitumeux dit IFF selon l'acronyme « Insonorisant en Feuille Fusible » présentant une masse volumique supérieure à 2 g.cm⁻³ et comprenant du bitume, au moins une charge minérale tel que du carbonate de calcium et/ou de l'oxyde de calcium et/ou similaire, et au moins un polymère, et **en ce que** ladite couche adhésive est obtenue dans un adhésif non sensible à la pression dit non PSA à base de polyoléfine thermofusible ou d'éthylène-vinylacetate (EVA) thermofusible, ledit adhésif présentant un pouvoir adhésif supérieur à 5 N/cm à température ambiante.

2. Panneau suivant la revendication 1 ***caractérisé* en ce que** ledit adhésif présente une déformation en fluage inférieure à 1 mm pour une durée supérieure à 24 heures pour une charge de 300 g.cm⁻² à une température de 85°C.

3. Panneau suivant l'une quelconque des revendications 1 ou 2 ***caractérisé* en ce que** ladite paroi d'étanchéité (2) présente une tension de surface inférieure à 35 J.m⁻².

4. Panneau suivant l'une quelconque des revendications 1 à 3 ***caractérisé* en ce que** ledit adhésif présente une viscosité comprise entre 30000 mPas et 2000 mPas à une température comprise entre 160°C et 180°C.

5. Panneau suivant l'une quelconque des revendications 1 à 4 ***caractérisé* en ce que** ledit adhésif présente un point de ramollissement bille et anneau supérieur à 100°C.

6. Panneau suivant l'une quelconque des revendications 1 à 5 ***caractérisé* en ce que** la face libre de la ou des plaques en matériau insonorisant (3) est recouverte en tout ou partie d'une peinture anti-collante.

7. Panneau suivant la revendication 6 ***caractérisé* en ce que** ladite peinture anti-collante est composée de résines, de pigments et de charges minérales dispersées dans de l'eau.

## Patentansprüche

1. Dichtungs- und Schalldämmungsplatte (1) für ein Fahrzeug, die es erlaubt, den akustischen Komfort der Fahrzeuge, wie der Kraftfahrzeuge oder ähnlicher, zu verbessern, die mindestens eine Dichtungswand (2) umfasst, deren umfänglicher Rand geeignet ist, auf dichte Art an einer Struktur des Fahrzeugs angeordnet zu sein, und mindestens eine Platte aus schalldämmendem Material (3), die mittels einer Klebeschicht fest mit einer der Seiten der Wand verbunden ist, **dadurch gekennzeichnet, dass** die Dichtungswand (2) aus einem aus einem physikalisch vernetzten Polyethylen-Schaumstoff mit geschlossenen Zellen erhalten wird, der eine Stärke zwischen 2 und 5 mm, eine volumenbezogene Masse kleiner als 0,5 g.cm⁻³ und ein Elastizitätsmodul zwischen 4 und 30 N/mm² aufweist, dadurch, dass die Platte oder Platten, die aus schalldämmendem Material (3) aus einem bituminösen, IFF für "Insonorisant ä Feuille Fusible" (Schalldämmungsmittel mit schmelzbarer Folie) genannten, Material erhalten werden, das eine volumenbezogene Masse größer als 2 g.cm⁻³ aufweist, und Bitumen, mindestens eine mineralische Füllung, wie Calciumcarbonat und/oder Calciumoxid und/oder ähnliches, und mindestens ein Polymer umfassen, und dadurch, dass die Klebeschicht aus einem druckunempfindlichen, nicht-PSA genannten Klebstoff auf der Basis eines wärmeschmelzbaren Polyolefins oder wärmeschmelzbaren Ethylenvinylacetats (EVA) erhalten wird, wobei der Klebstoff bei Raumtemperatur eine Haftkraft größer als 5 N/cm aufweist.

2. Platte nach Anspruch 1, **dadurch gekennzeichnet, dass** der Klebstoff eine Kriechverformung kleiner als 1 mm für eine Dauer von mehr als 24 Stunden für eine Last von 300 g.cm⁻² bei einer Temperatur von 85 °C aufweist.

3. Platte nach einem der Ansprüche 1 oder 2, **dadurch gekennzeichnet, dass** die Dichtungswand (2) eine Oberflächenspannung kleiner als 35 J.m⁻² aufweist.

4. Platte nach einem der Ansprüche 1 bis 3, **dadurch gekennzeichnet, dass** der Klebstoff eine Viskosität zwischen 30000 MPa und 2000 MPa bei einer Temperatur zwischen 160 °C und 180 °C aufweist.

5. Platte nach einem der Ansprüche 1 bis 4, **dadurch gekennzeichnet, dass** der Klebstoff einen Erweichungspunkt Ring und Kugelgrößer als 100 °C aufweist.

6. Platte nach einem der Ansprüche 1 bis 5, **dadurch gekennzeichnet, dass** die freie Seite der Platte(n) aus schalldämmendem Material (3) ganz oder teilweise mit einem Haftschutzanstrich abgedeckt ist/sind.

7. Platte nach Anspruch 6, **dadurch gekennzeichnet, dass** der Haftschutzanstrich aus Harzen, Pigmenten und mineralischen Füllstoffen, die in Wasser dispergiert sind, besteht.

## Claims

1. Sealing and soundproofing panel (1) for a vehicle making it possible to improve the acoustical comfort of vehicles such as motor vehicles or similar, comprising at least one sealing wall (2) of which the peripheral edge is capable of being arranged in a sealed manner against a structure of the vehicle, and at least one plate made of soundproofing material (3) made integral on one of the faces of the wall by means of an adhesive layer, **characterised in that** said sealing wall (2) is obtained in a polyethylene foam with physically closed cross-linked cells having a thickness of between 2 and 5 mm, a density less than 0.5 g.cm⁻³ and Young's modulus between 4 and 30 N/mm², **in that** the plate or plates made of soundproofing material (3) are obtained in a bituminous material called "Fusible Soundproofing Sheet" which has a density greater than 2 g.cm⁻³ and which comprises bitumen, at least one mineral filler such as calcium carbonate and/or calcium oxide and/or similar, and at least one polymer, and **in that** said adhesive layer is obtained in an adhesive that is not sensitive to the so-called non-PSA pressure based on hot-melt polyolefin or hot-melt ethylene and vinyl acetate (EVA), said adhesive having an adhesive strength greater than 5 N/cm at ambient temperature.

2. Panel according to claim 1, **characterised in that** said adhesive has a creep strain less than 1 mm for a duration greater than 24 hours for a load of 300 g.cm⁻² at a temperature of 85 °C.

3. Panel according to any one of claims 1 or 2, **characterised in that** said sealing wall (2) has a surface tension of less than 35 J.m⁻².

4. Panel according to any one of claims 1 to 3, **characterised in that** said adhesive has a viscosity between 30000 mPas and 2000 mPas at a temperature of between 160 °C and 180 °C.

5. Panel according to any one of claims 1 to 4, **characterised in that** said adhesive has a ring and ball softening point of greater than 100 °C.

6. Panel according to any one of claims 1 to 5, **characterised in that** the free face of the plate(s) made of soundproofing material (3) is partially or entirely covered with an anti-tack paint.

7. Panel according to claim 6, **characterised in that** said anti-tack paint comprises resins, pigments and mineral fillers dispersed in water.
